# EUROPÄISCHE PATENTSCHRIFT

(11) **EP 1 554 509 B1**
(45) Veröffentlichungstag und Bekanntmachung des Hinweises auf die Patenterteilung: **14.06.2006**
(21) Anmeldenummer: 03773549.5
(22) Anmeldetag: 17.10.2003
(51) Int. Cl.: F16H 59/02

(54) **SCHALTVORRICHTUNG FÜR EIN AUTOMATISCHES GETRIEBE**
SHIFTING DEVICE FOR AN AUTOMATIC TRANSMISSION
DISPOSITIF DE PASSAGE DE VITESSES DESTINE A UNE TRANSMISSION AUTOMATIQUE

(30) Priorität: 21.10.2002 DE 10249074
(43) Veröffentlichungstag der Anmeldung: 20.07.2005
(73) Patentinhaber: ZF Lemförder Metallwaren AG, 49448 Lemförde (DE)
(72) Erfinder: GIEFER, Andreas, 49448 Lemförde (DE); MEYER, Jörg, 49419 Wagenfeld (DE)
(86) Internationale Anmeldenummer: PCT/DE2003/003490
(87) Internationale Veröffentlichungsnummer: WO 2004/038259

(56) Entgegenhaltungen:
- EP-A- 0 899 478
- DE-A- 3 927 922
- DE-A- 19 853 934
- US-B1- 6 230 579
- US-B1- 6 295 886

## Beschreibung

Die vorliegende Erfindung betrifft eine Schaltvorrichtung für ein automatisches Getriebe mit einer zusätzlichen manuellen Schaltfunktion.

Eine derartige Schaltvorrichtung ist beispielsweise in der DE 38 07 881 C2 beschrieben. Sie vereinigt in sich die Vorteile der Schaltung eines herkömmlichen Automatikgetriebes und eines manuell zu schaltenden Getriebes. Durch Verschwenken eines Wählhebels, der auf einer Kulisse schwenkbar gelagert ist, lassen sich in einer ersten Schaltgasse verschiedene automatisch schaltbare Fahrstufen, wie z.B. "P", "R", "N", "D", "3", "2", und "1" vorwählen. Der Wählhebel wird über eine Quergasse von der ersten Schaltgasse in eine zweite Schaltgasse umgeschaltet, in der einzelne manuell schaltbare Gänge vorwählbar sind, wie z.B. ein erster Gang, ein zweiter Gang, ein dritter Gang und ein vierter Gang, d.h. die Vorwärtsgänge. Das Schalten der manuell schaltbaren Gänge in der zweiten Schaltgasse erfolgt durch Verschwenken des Wählhebels in zwei entgegen gesetzte Richtungen, z.B. die Fahrtrichtung und die zur Fahrrichtung entgegengesetzte Richtung, wodurch ein Plus-Sensor und Minus-Sensor ansprechen, die eine Hochschaltung bzw. Herunterschaltung der manuellen Gänge veranlassen.

Üblicherweise wird bei derartigen Schaltvorrichtungen das Schalten zwischen bestimmten Fahrstufen in der ersten Schaltgasse durch eine Sperre verhindert, die durch die Betätigung eines Betätigungselementes überwunden werden kann. Beispielsweise kann von der Fahrstufe "P" in die Fahrstufe "R" nur bei Betätigung des Betätigungselementes gleichzeitig mit Drücken der Bremse geschaltet werden. Das Betätigungselement ist in der Regel ein Druckknopf am Knauf des Wählhebels. Auch das Schalten von "P" nach "R", von "R" nach "P" und von "N" nach "R" fordert in der Regel das Betätigen eines Betätigungselementes zur Überwindung der Schaltsperre. Sind hinter der Fahrstufe "D" noch weitere Fahrstufen vorgesehen, wie z.B. "3", "2" und "1", oder "2", und "1", so ist auch hier eine Schaltsperre zum Schalten "D" in die nächste Fahrstufe zu überwinden.

Eine gattungsgemäße Schaltvorrichtung ist aus der DE 198 53 934 bekannt.

Handelt es sich bei der Automatikschaltung um eine Schaltung mit einer zusätzlichen Schrittschalt-Funktion (manuelles Schalten oder Tiptronic), so wird in der Regel aus der Fahrstufe "D" heraus der Wählhebel über die Quergasse in die zweite Schaltgasse geschwenkt, wo durch Tippen bzw. Verschwenken des Wählhebels in die "+"- und "-"-Richtung die einzelnen Gänge manuell angewählt werden können. Der Wählhebel, der auf der Kulisse zur Auswahl der einzelnen Fahrstufen in den beiden Gassen verschwenkbar gelagert ist, wird beim Umschalten von der ersten Schaltgasse in die zweite Schaltgasse zusammen mit der Kulisse verschwenkt. Die oben angesprochenen Schaltsperren sitzen in der Regel auf der Kulisse, da sie das Verschwenken des Wählhebels auf der Kulisse sperren sollen. Für den Fall, dass nach der Fahrstufe "D" weitere Fahrstufen vorgesehen sind, die nur nach Überwindung der Schaltsperre angewählt werden können, so ist damit auch die Bewegung des Wählhebels in der zweiten Schaltgasse zumindest in eine der beiden Richtungen zur Anwahl der manuell schaltbaren Gänge gesperrt. Dies ist jedoch nicht gewünscht, da gerade beim manuellen Schalten keine Schaltsperren vorgesehen sein sollen, und die manuelle Schaltung durch leichtes Antippen bzw. Verschwenken des Wählhebels ermöglicht sein soll.

Die Aufgabe der vorliegenden Erfindung ist daher, eine Schaltvorrichtung für ein automatisches Getriebe mit einer zusätzlichen manuellen Schaltfunktion der oben beschriebenen Art zur Verfügung zu stellen, die in der ersten Schaltgasse das Verschwenken des Wählhebels von einer vorbestimmten Fahrstufe in zumindest eine weitere Fahrstufe durch eine mittels eines Betätigungselementes überwindbare Sperre verhindert, jedoch in der zweiten Schaltgasse das Verschwenken des Wählhebels zur Auswahl der einzelnen manuell schaltbaren Gänge ohne Sperre ermöglicht.

Diese Aufgabe wird durch eine Schaltvorrichtung für ein automatisches Getriebe mit einer zusätzlichen manuellen Schaltfunktion gemäß Anspruch 1 gelöst. Die erfindungsgemäße Schaltvorrichtung umfasst einen Wählhebel, der auf einer Kulisse dergestalt schwenkbar gelagert ist, dass in einer ersten Schaltgasse verschiedene automatisch schaltbare Fahrstufen und in einer zweiten Schaltgasse einzelnen manuell schaltbare Gänge vorwählbar sind, und ein Gehäuse, in dem die Kulisse mit dem Wählhebel dergestalt schwenkbar gelagert ist, dass ein Umschalten zwischen einer vorbestimmten Fahrstufe der ersten Schaltgasse und einer neutralen Position der zweiten Schaltgasse ermöglicht ist. Das Weiterschalten von der vorbestimmten Fahrstufe, z.B. der Fahrstufe "D", der ersten Schaltgasse in zumindest eine weitere Fahrstufe der ersten Schaltgasse, z.B. "3" oder "2" wird durch eine Sperre verhindert, die durch Betätigung eines Betätigungselementes überwunden wird. Erfindungsgemäß wird die Sperre durch einen Anschlag des Gehäuses und ein auf der Kulisse zwischen dem Wählhebel und dem Anschlag angeordnetes Zwischenstück gebildet.

Das Zwischenstück dient daher in der ersten Schaltgasse beim Versuch des Weiterschaltens von der vorbestimmten Fahrstufe in die weitere Fahrstufe als Anschlag für den Wählhebel und sperrt diese Bewegung, da es wiederum an dem Anschlag des Gehäuses anliegt. Diese Sperre kann durch Betätigung des Betätigungselementes überwunden werden. Das Zwischenstück und das Gehäuse sind dergestalt ausgebildet, dass sie die Bewegung des Wählhebels in der zweiten Schaltgasse nicht behindern.

Die vorliegenden Erfindung ermöglicht somit die Schaltsperre von der vorbestimmten Fahrstufe in die zumindest eine weitere Fahrstufe in der ersten Schaltgasse und das freie Verschwenken des Wählhebels in der zweiten Schaltgasse ohne großen Aufwand und auf sehr effektive Art und Weise.

Vorteilhafterweise ist das Gehäuse dergestalt ausgebildet, dass der Wählhebel bei Betätigung in der zweiten Schaltgasse ohne Behinderung durch das Zwischenstück frei bewegbar ist. Dabei bildet das Gehäuse vorteilhafterweise eine Ausnehmung, in die das Zwischenstück bei Betätigung des Wählhebels in der zweiten Schaltgasse eingreift.

Im Sinne der Erfindung kann das Zwischenstück beweglich auf der Kulisse angeordnet sein und bei Betätigung des Wählhebels in der zweiten Schaltgasse durch diesen bewegt werden. Dabei wird das Zwischenstück nach Bewegung durch den Wählhebel durch eine Feder wieder in seine Ausgangsposition zurückbewegt.

Vorteilhafterweise umfasst der Wählhebel eine Sperrstange, die das Weiterschalten von der vorbestimmten Fahrstufe der ersten Schaltgasse in zumindest eine weitere Fahrstufe der ersten Schaltgasse durch Drücken des Zwischenstückes gegen den Anschlag des Gehäuses verhindert, wobei die Sperrstange durch Betätigung des Betätigungselementes über das Zwischenstück angehoben wird, so dass das Weiterschalten ermöglicht wird.

Entsprechend einer sinnvollen Ausgestaltung der Erfindung kann die vorbestimmte Fahrstufe eine "D"-Fahrstufe und die zumindest eine weitere Fahrstufe der ersten Schaltgasse eine "3" oder "2"-Fahrstufe sein.

Die vorliegende Erfindung wird in der folgenden Figurenbeschreibung anhand eine bevorzugten Ausführungsbeispieles in Bezug auf die beigefügten Zeichnungen näher erläutert, in den zeigen
Figur 1 eine beispielhaftes Schaltschema eines Ausführungsbeispieles einer erfindungsgemäßen Schaltvorrichtung,
Figur 2 eine Perspektivansicht des Ausführungsbeispieles der erfindungsgemäßen Schaltvorrichtung, mit dem Wählhebel in der ersten Schaltgasse,
Figur 3 eine Perspektivansicht des in Figur 2 gezeigten Ausführungsbeispieles mit dem Wählhebel in der zweiten Schaltgasse,
Figur 4 eine seitliche Schnittansicht eines Teiles des in den Figuren 2 und 3 gezeigten Ausfühnmgsbeispieles der erfindungsgemäßen Schaltvorrichtung mit dem Wählhebel in der ersten Schaltgasse,
Figur 5 eine Schnittansicht eines Teiles des in den Figuren 2 und 3 gezeigten Ausführungsbeispieles der erfindungsgemäßen Schaltvorrichtung mit dem Wählhebel in der zweiten Schaltgasse, und
Figur 6 eine Perspektivansicht der Kulisse mit dem beweglichen Zwischenstück des in den Figuren 2-5 gezeigten Ausführungsbeispieles der erfmdungsgemäßen Schaltvorrichtung.

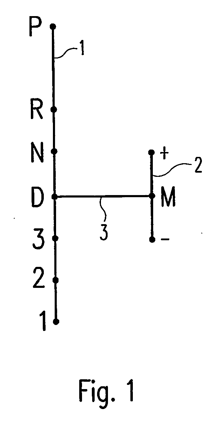

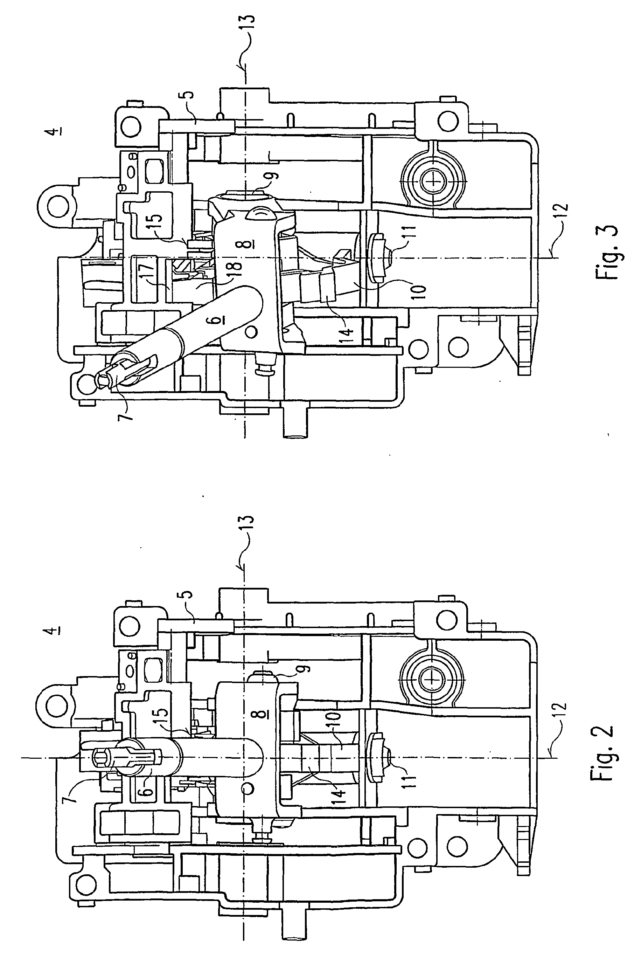

Figur 1 zeigt ein Schaltschema einer erfindungsgemäßen Schaltvorrichtung, die in einem Ausführungsbeispiel in den Figuren 2-6 näher erläutert ist. In dem Schaltschema sind eine erste Schaltgasse 1 mit automatisch schaltbaren Fahrstufen "P", "R", "M", "D", "3", "2", "1" sowie eine zweite Schaltgasse 2 zum Schalten von einzelnen manuell schaltbaren Gängen dargestellt. Hierbei wird in der zweiten Schaltgasse von einer neutralen Position "M" durch Verschwenken des Wählhebels in eine "+"-Position und einer "-"-Position ein Hinauf- bzw. Hinunterschalten der manuellen Gänge, z.B. erster bis vierter Gang bewirkt.

Nach dem Verschwenken bzw. Tippen des Wählhebels von der neutralen Position "M" in die "+"-Position oder die "-"-Position kehrt der Wählhebel automatisch in die neutrale Ausgangsposition "M" zurück. Das Verschwenken des Wählhebels von der ersten Schaltgasse 1 in die zweiten Schaltgasse 2 wird über ein Quergasse 3 erreicht, die eine vorbestimmte Fahrstufe der ersten Schaltgasse in der Regel, in der Regel die Fahrstufe "D", mit der neutralen Position "M" der zweiten Schaltgasse verbindet.

Es ist hervorzuheben, dass das in Figur 1 gezeigte Schaltschema lediglich ein Bespiel ist, und andere Anordnungen der Fahrstufe und Schaltpositionen möglich sind. Beispielsweise können sich nach der Falustufe "D" in der ersten Schaltgasse 1 lediglich zwei weitere Fahrstufen "2" und "1" oder auch nur eine einzige Fahrstufe, z.B. "1" oder "S" anschließen.

In Figur 2 ist eine Perspektivansicht eines Ausführungsbeispieles einer erfindungsgemäßen Schaltvorrichtung 4 dargestellt. Die dargestellte Schaltvorrichtung 4 ermöglicht das Auswählen von Fahrstufen beispielsweise gemäß dem in Figur 1 gezeigten Schaltthema.

Die Schaltvorrichtung 4 umfasst ein Gehäuse 5, in dem eine Kulisse 10 mit einem Wählhebel 6 zwischen einer ersten Schaltgasse und eines zweiten Schaltgasse schwenkbar gelagert ist. Die schwenkbare Lagerung der Kulisse 10 im Gehäuse 5 ist durch eine drehbare Lagerung 11 und eine Drehachse 12 angedeutet. Der Wählhebel 6 ist ein Automatik-Schalthebel bekannter Art und ragt von der Schaltvorrichtung 4 nach oben (in eingebautem Zustand). In seinem Inneren ist eine Sperrstange 7 angeordnet, die einen Teil der Schaltsperre zum Sperren der Verschaltung zwischen bestimmten Fahrstufen dient. Die Sperrstange 7 ist durch ein Betätigungselement bewegbar, um die Schaltsperre aufzuheben. Das Betätigungselement ist beispielsweise ein Druckknopf am (nicht gezeigtem) Knauf des Wählhebels 6.

Der Wählhebel 6 ist mittels eines Aufsatzes 8 schwenkbar auf der Kulisse 10 gelagert. Die schwenkbare Lagerung ist durch eine drehbare Befestigung 9 und eine Drehachse 13 angedeutet. Durch die schwenkbare Lagerung des Wählhebels 6 an der Kulisse 10 können die automatisch schaltbaren Fahrstufen in der ersten Schaltgasse 1 und die manuell schaltbaren Gänge der zweiten Schaltgasse 2, beispielsweise gemäß dem Schaltschema von Figur 1 vorgewählt werden. In der in Figur 2 gezeigten Darstellung sind die Kulisse 10 und der Wählhebel 6 in der ersten Schaltgasse 1 angeordnet, die in Längsrichtung der Zeichenebene verläuft. Die verschiedenen automatisch schaltbaren Fahrstufen der Schaltgasse 1 sind in einer Linie hintereinander entlang dieser Richtung angeordnet. Die Querrichtung der Zeichenebene ist die Richtung der Quergasse 3, durch die der Wählhebel 6 in die zweite Schaltgasse bewegt werden kann. Die erste Schaltgasse und die Quergasse 3 stehen senkrecht aufeinander. Die zweite Schaltgasse 2 verläuft ebenfalls in Längsrichtung der Zeichenebene, und steht ebenfalls senkrecht zur Quergasse 3. Damit sind die zweite Schaltgasse 3 und die erste Schaltgasse parallel zu einander.

In Figur 3 ist eine Perspektivansicht dargestellt, die das Ausführungsbeispiel der Schaltvorrichtung 4 von Figur 2 zeigt, wobei die Kulisse 10 und der Wählhebel 6 jedoch in der zweiten Schaltgasse angeordnet sind. Dabei ist der Wählliebel 6 in Figur 2 in der Position dargestellt, in der die Fahrstufe "D" ausgewählt ist, von der aus eine Bewegung in die Quergasse 3 zum Umschalten in die zweite Schaltgasse möglich ist. In Figur 3 ist der Wählhebel 6 entsprechend in der neutralen Position "M" in der zweiten Schaltgasse 2 dargestellt. Von der Fahrstufe "D" aus ist die Bewegung des Wählhebels in der ersten Schaltgasse 1 nach hinten in Richtung der weiteren Fahrstufe "3" durch eine Sperre verhindert. Die Bewegungsrichtung des Wählhebels 6 von der Fahrstufe "D" zur Fahrstufe "3" ist in der Zeichenebene von Figur 2 die Richtung nach oben und hinten. Die Schaltrichtung von der Fahrstufe "D" in die Fahrstufe "N", "R" und "P" sind in der Zeichenebene der Figur 2 die Bewegung nach vom und unten, d.h. in Richtung eines Anschlages 14 auf der Kulisse 10. Anschlag 14 dient als Anschlag des Wählhebels für die Fahrstufe "P".

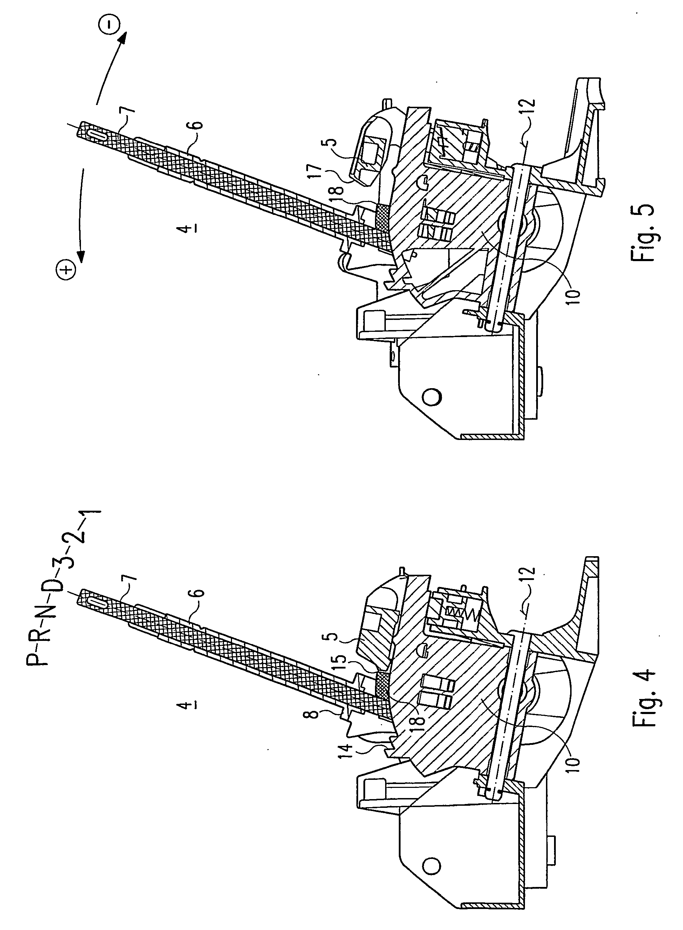

In der Fahrstufe "D" liegt der Wählliebel 6 über ein Zwischenstück 18 an einem Anschlag 15 des Gehäuses 5 an, so dass ein Weiterschalten aus der Fahrstufe "D" nicht ohne weiteres möglich ist. Der Anschlag 15, des Gehäuses 5 und das Zwischenstück 18 bilden daher eine Sperre, die das Weiterschalten von "D" in "3" verhindert. Dies ist in der Schnittdarstellung der Kulisse 10 und des Wählhebels 6 in Figur 4 gut zu erkennen. Der Wählhebel 6 befindet sich in der Fahrstufe "D" in der ersten Schaltgasse. Um den Wählhebel 6 in die Fahrstufe "3" zu verschwenken, müsste er nach rechts, d.h. im Urzeigersinn verschwenkt werden. Hier wird die Bewegung jedoch durch das Zwischenstück 18 verhindert, dass durch die Sperrstange 7 des Wählhebels 6 gegen den Anschlag 15 des Gehäuse 5 gedrückt wird. Durch Drücken des Betätigungselementes, z.B. des Knopfes am Knauf des Wählhebels 6 wird die Sperrstange 7 angehoben bzw. nach oben bewegt und liegt nicht mehr am Zwischenstück 18 an. Hierdurch kann der Wählhebel 6 weiter nach hinten in Richtung der Fahrstufe "3" bewegt werden.

Wie in der Sclmittansicht der Kulisse 10 und des Wählhebels 6 in Figur 5 dargestellt ist, ist das Gehäuse 5 dergestalt ausgeformt, dass das Zwischenstück 18, wenn die Kulisse 10 und der Wählhebel 6 in die zweite Schaltgasse verschwenkt sind, nicht am Gehäuse 5 anliegt. Wie in Figur 3 zu erkennen ist, bildet das Gehäuse 5 an der entsprechenden Stelle eine Ausnehmung, die durch den Rand 17 begrenzt wird. Diese Ausnehmung befindet sich neben dem Anschlag 15 in der zweiten Schaltgasse 2. In Figur 5 ist der Wählhebel 6 in der neutralen Position M der zweiten Schaltgasse dargestellt. Durch Tippen bzw. Verschwenken des Wählhebels 6 nach vorne ("+"-Richtung) oder hinten ("-"-Richtung) sind die manuell schaltbaren Gänge vorwählbar. Dabei ist die Bewegung des Wählhebels 6 nach hinten nicht durch einen Anschlag des Zwischenstückes 18 an dem Gehäuse 5 behindert, sondern der Wählhebel 6 und das Zwischenstück 18 sind frei bewegbar. Hierdurch ist das manuelle Schalten ohne Behinderung möglich.

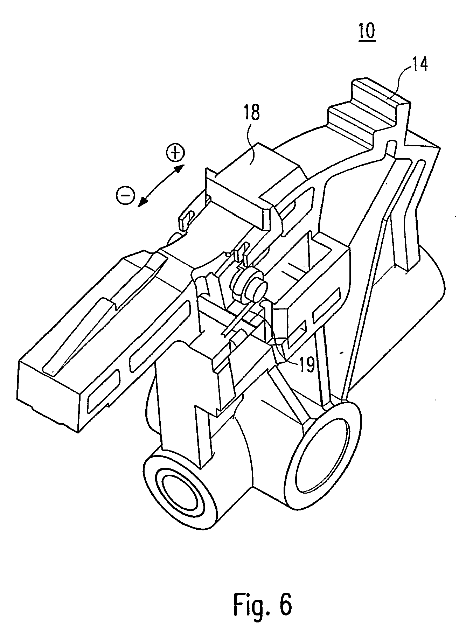

Das Zwischenstück 18 ist auf der Kulisse 10 beweglich bzw. verschiebbar, wie durch die Perspektivansicht der Kulisse 10 von Figur 6 zu erkennen ist. Das Zwischenstück 18 sitzt und gleitet auf einer leicht gerundeten Bewegungsbahn der Kulisse 10. Die Bewegung des Zwischenstückes 18 nach hinten ("-"-Richtung) wird dabei durch den Wählhebel 6 bzw. dessen Sperrstange 7 ausgelöst. Wenn daher der Wählhebel 6 zum manuellen herunterschalten einzelner Gänge in die "-"-Richtung verschwenkt wird und automatisch in die neutrale Position "M" zurückkehrt, so wird das Zwischenstück 18 ebenfalls in die "-"-Richtung verschoben. Um zu gewährleisten, dass das Zwischenstück 18 wieder in seine Ausgangsposition zurückkehrt, ist eine Feder 19 vorgesehen, die das Zwischenstück 18 in seine Ausgangsposition zurückbefördert.

### Bezugszeichenliste

- 1.: Schaltgasse
- 2.: Schaltgasse
- 3.: Quergasse
- 4.: Schaltvorrichtung
- 5.: Gehäuse
- 6.: Wählhebel
- 7.: Sperrstange
- 8.: Aufsatz
- 9.: Befestigung
- 10.: Kulisse
- 11.: Lagerung
- 12.: Drehachse
- 13.: Drehachse
- 14.: Anschlag
- 15.: Anschlag
- 17.: Rand
- 18.: Zwischenstück
- 19.: Feder

## Patentansprüche

1. Schaltvorrichtung (4) für ein automatisches Getriebe mit einer zusätzlichen manuellen Schaltfunktion, mit einem Wählhebel (6), der auf einer Kulisse (10) dergestalt schwenkbar gelagert ist, dass in einer ersten Schaltgasse (1) verschiedene automatisch schaltbare Fahrstufen und in einer zweiten Schaltgasse (2) einzelne manuell schaltbare Gänge anwählbar sind und mit einem Gehäuse (5), in dem die Kulisse (10) mit dem Wählhebel (6) dergestalt schwenkbar gelagert ist, dass ein Umschalten zwischen einer vorbestimmten Fahrstufe ("D") der ersten Schaltgasse (1) und einer neutralen Position ("M") der zweiten Schaltgasse (2) ermöglicht ist, **dadurch gekennzeichnet, daß** das Weiterschalten von der vorbestimmten Fahrstufe ("D") der ersten Schaltgasse (1) in zumindest eine weitere Fahrstufe ("3 ") der ersten Schaltgasse durch eine Sperre verhindert ist, die durch Betätigung eines Betätigungselementes überwunden wird, wobei die Sperre durch einen Anschlag (15) des Gehäuses (5) und ein auf der Kulisse (10) zwischen dem Wählhebel (6) und dem Anschlag (15) angeordnetes Zwischenstück (18) gebildet ist.

2. Schaltvorrichtung (4) gemäß Anspruch 1,
**dadurch gekennzeichnet,**
**dass** das Gehäuse (5) dergestalt ausgebildet ist, dass der Wählhebel (6) bei Betätigung in der zweiten Schaltgasse (2) ohne Behinderung durch das Zwischenstück (18) frei bewegbar ist.

3. Schaltvorrichtung (4) gemäß Anspruch 2,
**dadurch gekennzeichnet,**
**dass** das Gehäuse (5) eine Ausnehmung bildet, in die das Zwischenstück (18) bei Betätigung des Wählhebels (6) in der zweiten Schaltgasse (2) eingreift.

4. Schaltvorrichtung (4) gemäß Anspruch 1, 2 oder 3,
**dadurch gekennzeichnet,**
**dass** das Zwischenstück (18) beweglich auf der Kulisse (10) angeordnet ist und bei Betätigung des Wählhebels (6) in der zweiten Schaltgasse (2) durch diesen bewegt wird.

5. Schaltvorrichtung (4) gemäß Anspruch 4,
**dadurch gekennzeichnet,**
**dass** das Zwischenstück (18) nach Bewegung durch den Wählhebel (6) durch eine Feder (19) wieder in seine Ausgangsposition zurückbewegt wird.

6. Schaltvorrichtung (4) gemäß einem der Ansprüche 1 bis 5,
**dadurch gekennzeichnet,**
**dass** der Wählhebel (6) eine Sperrstange (7) umfasst, die das Weiterschalten von der vorbestimmten Fahrstufe (D) der ersten Schaltgasse (1) in zumindest eine weitere Fahrstufe (3) der ersten Schaltgasse (1) durch Drücken des Zwischenstückes (18) gegen den Anschlag (15) des Gehäuses (5) verhindert, wobei die Sperrstange (7) durch Betätigung des Betätigungselementes über das Zwischenstück (18) angehoben wird, so dass das Weiterschalten ermöglicht wird.

7. Schaltvorrichtung (4) gemäß einem der Ansprüche 1 bis 5,
**dadurch gekennzeichnet,**
**dass** die vorbestimmte Fahrstufe eine "D"- Fahrstufe ist, und die zumindest eine weitere Fahrstufe der ersten Schaltgasse eine "3" oder "2"-Fahrstufe ist.

## Claims

1. Shift device (4) for an automatic transmission with an additional manual shift function, having a selector lever (6), which is mounted pivotably on a shifting guide (10) in such a way that in a first shift gate (1) various, automatically selectable transmission steps and in a second shift gate (2) individual, manually shiftable gears are selectable, and having a housing (5), in which the shifting guide (10) with the selector lever (6) is mounted pivotably in a way that allows a switchover between a predetermined transmission step ("D") of the first shift gate (1) and a neutral position ("M") of the second shift gate (2), **characterized in that** the further shifting from the predetermined transmission step ("D") of the first shift gate (1) to at least one further transmission step ("3") of the first shift gate is prevented by an interlock, which is defeated by actuation of an actuating element, wherein the interlock is formed by a stop (15) of the housing (5) and by an intermediate piece (18) disposed on the shifting guide (10) between the selector lever (6) and the stop (15).

2. Shift device (4) according to claim 1,
**characterized in**
**that** the housing (5) is designed in such a way that the selector lever (6) upon actuation in the second shift gate (2) is freely movable without being hindered by the intermediate piece (18).

3. Shift device (4) according to claim 2,
**characterized in**
**that** the housing (5) forms a recess, into which the intermediate piece (18) engages upon actuation of the selector lever (6) in the second shift gate (2).

4. Shift device (4) according to claim 1, 2 or 3,
**characterized in**
**that** the intermediate piece (18) is disposed movably on the shifting guide (10) and upon actuation of the selector lever (6) in the second shift gate (2) is moved by the selector lever (6).

5. Shift device (4) according to claim 4,
**characterized in**
**that** the intermediate piece (18) after being moved by the selector lever (6) is moved back into its initial position by means of a spring (19).

6. Shift device (4) according to one of claims 1 to 5,
**characterized in**
**that** the selector lever (6) comprises a ratchet bar (7), which prevents the further shifting from the predetermined transmission step (D) of the first shift gate (1) to at least one further transmission step (3) of the first shift gate (1) by pressing the intermediate piece (18) against the stop (15) of the housing (5), wherein the ratchet bar (7) by actuation of the actuating element is lifted over the intermediate piece (18), thereby allowing the further shifting.

7. Shift device (4) according to one of claims 1 to 5,
**characterized in**
**that** the predetermined transmission step is a "D" transmission step and the at least one further transmission step of the first shift gate is a "3" or "2" transmission step.

## Revendications

1. Dispositif de changement de vitesse (4) pour transmission automatique comportant une fonction supplémentaire de commutation manuelle, comprenant un levier sélecteur (6) monté de façon pivotante sur un coulisseau (10) de manière telle que, dans un premier couloir de commutation (1), différentes plages de vitesses à commutation automatique puissent être sélectionnées, et, dans un second couloir de commutation (2), différents rapports individuels à commutation manuelle puissent être sélectionnés, et comprenant un boîtier (5) dans lequel le coulisseau (10) peut être déplacé en basculement de telle manière qu'un passage entre une plage de vitesses prédéterminée ("D") du premier couloir de commutation (1) et une position neutre ("M") du second couloir de commutation (2) soit possible, **caractérisé en ce que** la poursuite des changements de vitesses de la plage de vitesses prédéterminée ("D") du premier couloir de commutation (1) vers au moins une autre plage de vitesses ("3") du premier couloir de commutation soit empêchée par un verrouillage qui peut être vaincu par l'actionnement d'un élément d'actionnement, le verrouillage étant constitué par une butée (15) du boîtier (5) et un élément intermédiaire (18) disposé sur le coulisseau (10), entre le levier sélecteur (6) et la butée (15).

2. Dispositif de changement de vitesse (4) selon la revendication 1, **caractérisé en ce que** le boîtier (5) est configuré de manière telle que, lorsqu'il est actionné dans le second couloir de commutation (2), le levier sélecteur (6) puisse être déplacé librement, sans entrave par l'élément intermédiaire (18).

3. Dispositif de changement de vitesse (4) selon la revendication 2, **caractérisé en ce que** le boîtier (5) forme un évidement dans lequel s'emboîte l'élément intermédiaire (18) lors d'un actionnement du levier sélecteur (6) dans le second couloir de commutation (2).

4. Dispositif de changement de vitesse (4) selon les revendications 1, 2 ou 3, **caractérisé en ce que** l'élément intermédiaire (18) est monté de façon mobile sur le coulisseau (10) et est entraîné en déplacement par le levier sélecteur (6) lorsque celui-ci est déplacé dans le second couloir de commutation (2).

5. Dispositif de changement de vitesse (4) selon la revendication 4, **caractérisé en ce qu'**après le déplacement par le levier sélecteur (6), l'élément intermédiaire (18) est ramené dans sa position de départ par un ressort (19).

6. Dispositif de changement de vitesse (4) selon l'une des revendications 1 à 5, **caractérisé en ce que** le levier sélecteur (6) comporte une tige de verrouillage (7) qui empêche la poursuite des passages des vitesses depuis la plage de vitesses prédéterminée ("D") dans le premier couloir de commutation (1) vers au moins une autre plage de vitesses ("3") du premier couloir de commutation (1) par appui de l'élément intermédiaire (18) contre la butée (15) du boîtier (5), la tige de verrouillage (7) étant soulevée au-dessus de l'élément intermédiaire (18) grâce à l'actionnement d'un élément d'actionnement, de manière à autoriser la poursuite des passages de vitesses.

7. Dispositif de changement de vitesse (4) selon l'une des revendications 1 à 5, **caractérisé en ce que** la plage de vitesses prédéterminée est une plage de vitesses "D", et que ladite au moins une autre plage de vitesses du premier couloir de commutation est une plage de vitesses "3" ou "2"
